(19) Europäisches Patentamt
European Patent Office
Office européen des brevets

(11) **EP 3 231 774 B1**

(12) **FASCICULE DE BREVET EUROPEEN**

(45) Date de publication et mention
de la délivrance du brevet:
**11.04.2018 Bulletin 2018/15**

(51) Int Cl.:
*C02F 1/68* *(2006.01)*    *C02F 5/08* *(2006.01)*
*C23F 11/18* *(2006.01)*    *F24D 19/00* *(2006.01)*
*C02F 1/02* *(2006.01)*

(21) Numéro de dépôt: **16165632.7**

(22) Date de dépôt: **15.04.2016**

(54) **PROCÉDÉ DE TRAITEMENT D'INSTALLATIONS D'EAU SANITAIRE**

**VERFAHREN ZUR BEHANDLUNG VON SANITÄRWASSERANLAGEN**

**METHOD FOR TREATING SANITARY WATER INSTALLATIONS**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**18.10.2017 Bulletin 2017/42**

(73) Titulaire: **Dipan SA**
**1260 Nyon (CH)**

(72) Inventeur: **DESCLOUX, Pierre**
**1292 Chambésy (CH)**

(74) Mandataire: **reuteler & cie SA**
**Chemin de la Vuarpillière 29**
**1260 Nyon (CH)**

(56) Documents cités:
**EP-B1- 1 432 534    GB-A- 847 981**
**US-A- 5 236 600**

**Description**

La présente invention concerne un procédé de traitement de la surface intérieure des conduites d'installations d'eau sanitaire.

Un procédé de traitement préventif de la corrosion, de l'oxydation et de dépôts dans des circuits d'eau sanitaire par l'injection de silicates est connu de EP1'432'534B1. Des solutions de silicates de sodium sont injectées dans les réseaux d'eau sanitaire pour limiter le phénomène de corrosion à l'intérieur des conduites. L'injection s'effectue durant l'exploitation du réseau d'eau sanitaire, de manière continue et en quantité proportionnelle au débit d'eau, néanmoins, en concentrations garantissant le respect des normes alimentaires. La présence des silicates dans l'eau freine la corrosion par la formation d'un film fin protecteur qui se dépose sur les surfaces intérieures des conduites. La présence de ce film protecteur limite les échanges chimiques entre l'eau et la conduite. Ce procédé est efficace pour traiter tous les matériaux subissant des phénomènes de corrosion, notamment les alliages ferreux ou les alliages de cuivre.

On effectue, en général, en premier lieu un diagnostic ayant pour objectif de fournir un descriptif de l'état du réseau d'eau à traiter. Ce diagnostic permet de définir le niveau de dégradation des conduites. En fonction de l'état des conduites, un nettoyage de celles-ci peut s'avérer utile, notamment pour éliminer les dépôts d'oxydation et de tartre pouvant obstruer la conduite, dégrader la qualité de l'eau, accélérer la dégradation des conduites par leur présence (notamment dans le cas de la corrosion caverneuse) et risquant de gêner la bonne formation du film lors de l'étape de traitement.

Une méthode connue pour le nettoyage des conduites est une injection d'acides permettant la dissolution des dépôts à l'intérieur des conduites. Cette approche a l'avantage d'être simple à utiliser et efficace. Toutefois, dans le cas d'une corrosion relativement avancée, on pourra avoir la présence de micro-perforations locales des conduites liées au phénomène de corrosion par piqure dans le cas du cuivre, ou de corrosion caverneuse dans le cas des alliages ferreux. Ces micro-perforations sont souvent bouchées par des dépôts d'oxydation et de tartre eux-mêmes, ne générant ainsi aucune fuite. Dans ces situations, le nettoyage aux acides dissout ces petits « bouchons » et des micro-fuites apparaissent.

Une approche pour remédier à ce problème serait d'identifier les sections de conduite affectées et de remplacer ou manchonner les éléments défaillants. Néanmoins, ceci représente une opération extrêmement longue et complexe autant pour identifier la position de la fuite (car les conduites sont souvent emmurées et le débit de fuite est faible) que pour la réparer.

Un autre problème lié au nettoyage chimique est le phénomène de coloration (eaux rouges, turbidité) de l'eau lors de la remise en service du réseau. Malgré la neutralisation des produits de nettoyage et le rinçage effectué après le nettoyage, on constate parfois la présence d'une eau colorée, résultant d'une réactivation très rapide de l'oxydation de l'intérieur de la conduite mise à nu par le nettoyage.

Une fois la conduite nettoyée, on peut procéder à son traitement préventif à la corrosion par injection continue de silicates. La concentration de silicates doit respecter les normes alimentaires légales en vigueur dans différents pays. Pour les silicates dans l'eau de boisson en Suisse, le manuel suisse des denrées alimentaires (MSDA) et l'ordonnance fédérale sur les substances étrangères (OSEC) proposent une valeur de tolérance pour les silicates ajoutés (à des fins de protection contre la corrosion) qui est de 5 milligrammes de silicium par litre d'eau (mg de Si / L d'eau) en traitement courant et 10 mg de Si / L d'eau à court terme (ne dépassant pas 3 mois). Bien que les normes alimentaires ne soient pas les mêmes dans tous les pays, la pratique en Suisse est considérée comme une pratique sûre pour la santé humaine et peut servir de référence. A ces concentrations, la vitesse de formation du film de silicate peut être trop lente pour former une couche de protection suffisante pour remédier aux problèmes susmentionnés. Par ailleurs, la vitesse de formation de la couche susmentionnée est difficile à contrôler et dépend de divers paramètres, notamment :

- la quantité d'eau consommée ;
- le débit et la vitesse de l'écoulement;
- la température - le rendement de la déposition étant plus faible dans de l'eau froide que dans de l'eau chaude ;
- et ce que nous appellerons des paramètres environnementaux tel que la composition de l'eau, notamment son pH et sa dureté, les matériaux composants la conduite et d'autres phénomènes comme la présence de courants vagabonds. On regroupe ainsi dans paramètres environnementaux l'ensemble des éléments ayant une influence sur la formation de couche susmentionnée, mais néanmoins non maitrisables par la présente invention.

Un état de surface rugueuse d'une conduite dégradée peut aussi perturber le dépôt d'un film de protection adéquat, par exemple à cause des perturbations locales sur l'écoulement d'eau.

Un traitement en continu tel que proposé dans le brevet EP1'432'534B1 peut ne pas être suffisant pour éliminer ou réduire suffisamment certains micropolluants ou pathogènes pouvant migrer des conduites d'eau sanitaire vers l'eau consommable. Les sources possibles de ces micropolluants et de germes pathogènes sont les divers éléments composants les conduites, à savoir:

- Les tuyaux à proprement parler.
- Les soudures et joints liés à l'assemblage des tuyaux.
- Les équipements divers nécessaires au bon fonctionnement d'un réseau hydraulique tel que vannes, robinets ou débitmètres.

Parmi les micropolluants indésirables, on peut citer, de manière non-exhaustive:

- Le plomb, qui peut provenir des différents éléments, comme les tuyaux en plomb, les soudures étain-plomb, les accessoires en laitons et les tuyaux en PVC.
- Le cadmium, le chrome et le nickel qui peuvent provenir des éléments en cuivre faiblement allié.
- Le zinc qui peut provenir des éléments en acier galvanisé.
- Les chlorures de vinyle qui peuvent provenir des tuyaux en PVC.
- Les benzopyrènes qui peuvent provenir des tuyaux en polyéthylène.

Certains germes pathogènes aiment se développer à la surface intérieure des conduites ainsi que dans les multiples recoins, comme par exemple, la légionnelle.

Un but général de l'invention est de fournir un procédé de traitement de la surface intérieure des conduites d'installations d'eau sanitaire permettant d'assurer une bonne qualité d'eau et/ou d'offrir une bonne protection contre la dégradation des conduites.

Il est avantageux de fournir un procédé offrant une bonne protection contre la corrosion et la formation de dépôts.

Il est avantageux de fournir un procédé permettant de limiter la contamination de l'eau sanitaire par des polluants et des pathogènes présents dans les circuits d'eau.

Il est avantageux de fournir un procédé permettant la réparation de micro-fuites.

Il est avantageux de fournir un procédé permettant de prévenir rapidement la formation de corrosion après nettoyage d'une installation d'eau sanitaire.

Il est avantageux de fournir un procédé augmentant la fiabilité et l'efficacité d'un traitement en continu par injection de silicates répondant aux normes alimentaires, pour la prévention de la corrosion et/ou de la formation de dépôts dans des circuits d'eau sanitaire.

Dans la présente invention, on décrit un procédé de traitement d'un circuit d'eau sanitaire, comprenant l'injection d'un produit de traitement comprenant des silicates, dans de l'eau circulant dans ledit circuit pour former un film sur les surfaces intérieurs. L'injection du produit de traitement comprend au moins une étape d'injection de silicates, hors exploitation du réseau d'eau sanitaire, à une concentration entre 100 et 200'000 milligrammes de silicium par litre d'eau (mg de Si / L d'eau) dans l'eau circulant dans ledit circuit pendant une durée inférieure à 48 heures (h), le débit d'eau circulant dans le circuit étant ajusté dans une gamme entre 0.05 et 100 litres par minute (L/min) et la température d'eau circulant dans le circuit étant ajustée dans une gamme entre 35 et 65 °C.

Avantageusement, l'imprégnation rapide de silicates sur la surface intérieure de la conduite permet de fournir une couche résistante et fiable sur toute la surface intérieure, et de colmater des éventuelles micro-perforations. Cette couche d'imprégnation sert aussi d'excellente base pour un traitement en continu qui alimente cette couche de base afin de maintenir une protection à longue durée. Aussi, la formation rapide d'une couche optimale permet de :

- limiter la migration de micropolluants issus des tuyaux, soudures et accessoires de conduites vers l'eau consommable, et de
- prévenir / limiter la contamination de l'eau consommable par des germes pathogènes se développant dans les conduites.

Le procédé selon l'invention permettant la formation quasi immédiate d'un film protecteur qui évite ainsi le contact entre l'eau et la conduite, est très efficace pour limiter la migration des micropolluants vers l'eau consommable. Par ailleurs, la formation rapide d'un film sur la surface intérieure des conduites, bouchant les petites cavités et réduisant la rugosité de la surface, permet de limiter le développement de ces germes par :

◦ remplissage des cavités (les zones de développement des germes sont condamnées)
◦ emprisonnement des germes (les germes existants peuvent être recouverts par le film). Selon une forme d'exécution, la concentration des silicates dans l'eau circulant dans ledit circuit est ajustée entre 500 et 50'000 mg/L, de préférence entre 1'000 et 20'000 mg de Si / L d'eau.

Selon une forme d'exécution, la durée d'une étape d'injection est comprise entre 30 minutes et 12 heures, de préférence entre 1 heure et 4 heures, par exemple autour de 2 heures. Selon une forme d'exécution, le débit d'eau circulant dans le circuit est ajusté dans une gamme entre 0.05 et 10 L/min.

Selon une forme d'exécution, la température de l'eau circulant dans le circuit est ajustée dans une gamme entre 40 et 60 °C, de préférence entre 50 et 60 °C, par exemple autour de 55°C. Avantageusement, l'ajustement de la température dans ces plages permet de former la couche de silicates plus rapidement et de la rendre plus homogène.

Selon une forme d'exécution avantageuse, le procédé comprend au moins deux cycles d'injection de produit de traitement, de préférence au moins trois cycles d'injection de produit de traitement. Avantageusement, la pluralité de cycles permet d'améliorer la résistance de la couche de silicates en améliorant la cristallisation par couches minces successives.

Selon une forme d'exécution avantageuse, le procédé comprend au moins une étape de séchage par le vidage d'eau du circuit pour une durée entre 5 minutes et deux heures, après au moins un des cycles d'injection de produit de traitement. Le séchage permet avantageusement d'augmenter la résistance de la couche de silicates formés sur la surface intérieure des conduites.

Selon une forme d'exécution, on effectue une étape de séchage après chaque étape d'injection de produit de traitement.

Selon une forme d'exécution, la durée d'une étape de séchage est entre 10 minutes et 1 heure, de préférence entre 20 minutes et 40 minutes, par exemple autour de 30 minutes.

Selon une forme d'exécution, le circuit d'eau sanitaire comprend un circuit d'eau froide, et le procédé comprend une étape d'interconnexion du circuit d'eau froide à une source d'eau chaude configuré pour faire circuler l'eau chaude dans le circuit d'eau froide pendant l'injection du produit de traitement. Cela permet avantageusement d'optimiser le procédé d'imprégnation pour les circuits d'eau froide.

Selon une forme d'exécution, le circuit d'eau sanitaire comprend un circuit d'eau froide et un circuit d'eau chaude, et le procédé comprend une étape d'interconnexion du circuit d'eau froide au circuit d'eau chaude configuré pour faire circuler l'eau chaude dans le circuit d'eau froide pendant l'injection du produit de traitement. Cela permet avantageusement d'optimiser le procédé d'imprégnation pour les circuits d'eau froide, de manière économe, puisque les circuits d'eau chaude et d'eau froide sont traités simultanément.

Selon une forme d'exécution, la source d'eau chaude peut être une source externe hors réseau.

Selon une forme d'exécution, les silicates sont sous forme de silicates de sodium en solution, notamment comprenant principalement $(Na_2O)_n$ + $SiO_2$, $n$ étant compris entre 1.6 et 3.8.

Selon une forme d'exécution, le procédé peut comprendre une étape de nettoyage du circuit d'eau sanitaire avant l'injection du produit de traitement comprenant des silicates, l'étape de nettoyage comprenant une injection d'acide dans le circuit d'eau sanitaire.

Selon une forme d'exécution, après les étapes de traitement ponctuel mentionnées ci-dessus, on peut effectuer une injection continue du produit de traitement comprenant des silicates en quantité proportionnelle au volume d'eau entrant dans le circuit de circulation d'eau sanitaire, la quantité maximum de produit injecté ne dépassant pas une valeur fixée par les normes alimentaires.

D'autres buts et aspects avantageux de l'invention apparaitront à la lecture de la description détaillée de formes d'exécution et des dessins.

La Fig. 1 est un diagramme illustrant globalement un procédé de diagnostic et de traitement d'installations d'eau sanitaire selon une forme d'exécution de l'invention ;

La Fig. 2 est un diagramme illustrant un procédé de traitement d'une installation d'eau sanitaire selon une forme d'exécution de l'invention ;

La Fig. 3 est un graphique illustrant des étapes de traitement en fonction du temps d'une partie du procédé selon une forme d'exécution de l'invention ;

La Fig. 4 est une vue schématique d'une installation d'eau sanitaire configurée pour un procédé de traitement selon une première forme d'exécution de l'invention ;

La Fig. 5 est une vue schématique d'une installation d'eau sanitaire configurée pour un procédé de traitement selon une deuxième forme d'exécution de l'invention ;

La Fig. 6 est une vue schématique d'une installation d'eau sanitaire configurée pour un procédé de traitement selon une troisième forme d'exécution de l'invention ;

La Fig. 7 est une vue schématique d'une installation d'eau sanitaire configurée pour un procédé de traitement selon une quatrième forme d'exécution de l'invention.

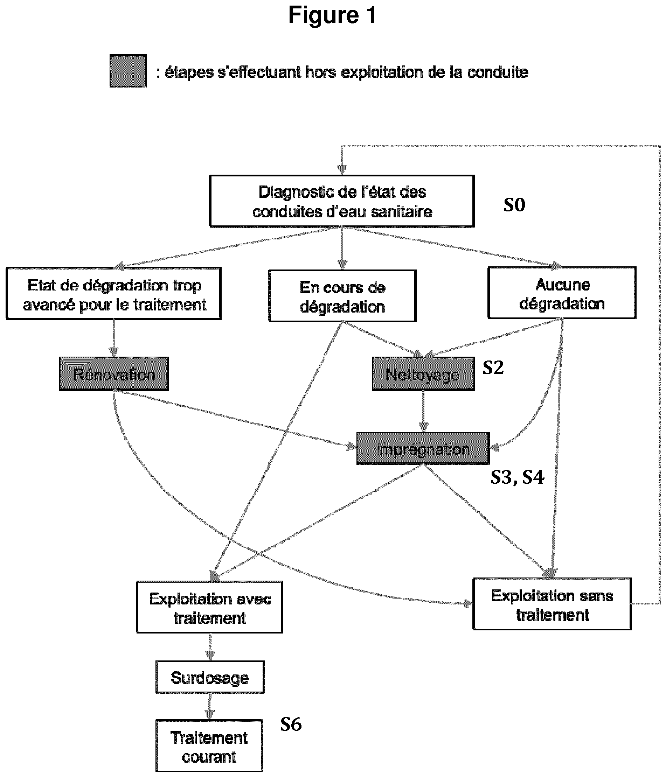

Faisant référence aux figures, un procédé de traitement d'un circuit d'eau sanitaire comprend l'injection d'un produit de traitement comprenant des silicates dans de l'eau circulant dans ledit circuit pour former un film sur les surfaces intérieures dudit circuit. Ce procédé de traitement peut-être précédé par une étape de diagnostic S0 de l'état des conduites du réseau d'eau sanitaire, et en fonction des résultats, d'une prise de décision sur les procédés à effectuer tel qu'illustré à la figure 1.

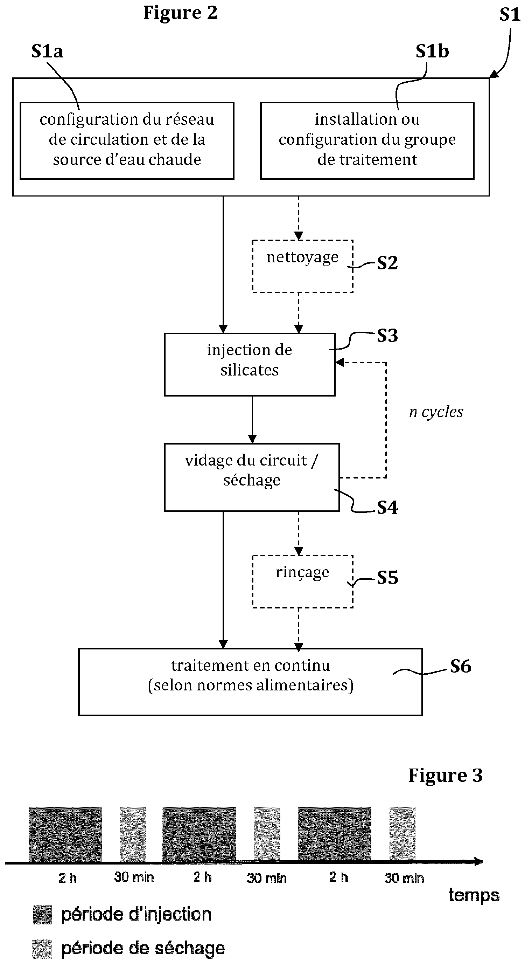

Faisant référence à la figure 2, une première étape S1 comprend la préparation de l'installation de traitement et la configuration du réseau d'eau sanitaire pour le procédé d'imprégnation S3, S4. La configuration du réseau peut notamment comprendre l'interconnexion d'un circuit d'eau froide à un chauffe-eau externe et/ou l'interconnexion d'un circuit d'eau froide à un circuit d'eau chaude du réseau d'eau sanitaire d'un bâtiment ou partie d'un bâtiment, afin que la température du circuit d'eau froide puisse être augmenté à une température optimale pour le procédé d'imprégnation. La température peut être ajustée par un contrôle de mélange (débit) d'eau chaude et d'eau froide injecté dans le circuit sous traitement pendant le procédé d'imprégnation. Divers moyens d'ajustement automatiques de flux d'eau chaude et froide en entrée pour stabiliser la température en sortie, bien connus en soi, peuvent être utilisés dans l'installation de traitement pour ajuster la température de traitement.

Le procédé de traitement selon l'invention comprend un procédé d'imprégnation S3, S4 d'un film de silicates qui s'effectue hors exploitation normale du réseau d'eau. Le procédé d'imprégnation S3, S4 est ponctuel et s'effectue de préférence en moins de 12h afin de limiter la mise hors exploitation du réseau d'eau sanitaire. Le procédé de traitement peut également comprendre, après le procédé d'imprégnation S2, un procédé d'injection continue S6 du produit de traitement comprenant des silicates en quantité proportionnelle au volume d'eau entrant dans le circuit d'eau sanitaire, la quantité maximum de produit injecté ne dépassant pas une valeur fixée par les normes alimentaires. Avant l'imprégnation, le procédé de traitement peut comprendre en outre un procédé de nettoyage S2 du circuit d'eau sanitaire. L'étape de nettoyage peut notamment comprendre l'injection d'acide dans le circuit d'eau sanitaire.

Le positionnement du procédé d'imprégnation S3, S4 est présenté dans les figures 1 et 2. Il s'effectue :

• En général, postérieurement à un procédé de nettoyage S2, mais aussi à tout autre moment de la vie d'un réseau d'eau sanitaire, par exemple, dans le cas d'un traitement préventif sur une partie de circuit neuve.
• En général, antérieurement à une exploitation avec traitement continu S6 respectant les normes alimentaires, mais aussi parfois antérieurement à une exploitation sans traitement, comme par exemple, dans le cas d'une conduite en bon état subissant un nettoyage pour cause de tartre, et où on applique une imprégnation pour éviter les problèmes d'eaux colorées.

Contrairement aux étapes postérieures de surdosage et de traitement en continu S6, le réseau d'eau sanitaire n'est pas en exploitation durant le procédé d'imprégnation S3, S4. Ceci permet d'appliquer diverses procédures d'injection de silicates ainsi que d'utiliser différentes valeurs de paramètres physiques et chimiques d'injection de silicates facilitant fortement la formation du film protecteur.

Ce procédé est aussi idéalement composé d'une alternance de deux étapes :

• Une étape d'injection S3 d'une solution de silicates dans les conduites en concentration dépassant les normes alimentaires et à des températures variant entre 35 et 65°C, de préférence entre 40 et 60°C. Cette période d'injection a pour objectif de déposer rapidement une couche de silicates.
• Une étape de séchage S4 du film protecteur qui a pour objectif de durcir et stabiliser la couche par dessiccation. Cette étape favorise la tenue du film protecteur, elle n'est cependant pas indispensable, le procédé d'imprégnation pouvant être aussi réalisé uniquement par une étape d'injection.

Idéalement, la procédure d'imprégnation comprend une pluralité n de cycles, notamment au moins deux cycles, mais de préférence trois cycles, ou plus. Chaque cycle comprend une étape d'injection S3 qui peut être suivie d'une étape de séchage S4, ou simplement d'un délai d'attente sans vidage des circuits d'eau. L'étape de séchage peut être effectuée en vidant le circuit d'eau et en laissant de l'air entrer dans le circuit, suivi par un délai d'attente qui peut se situer entre 5 minutes et 4 heures, mais qui a une durée située de préférence entre 10 minutes et 1 heure, par exemple entre 20 et 40 minutes. Dans l'exemple illustré à la figure 3, il y a trois cycles d'injection d'environ deux heures chacun, et trois cycles de séchage d'environ 30 minutes chacun.

Dans une variante, une ou plusieurs des étapes de séchage peut comprendre un soufflage forcé d'air, ou d'un gaz favorisant le séchage de la couche du produit de traitement, dans le circuit sous traitement. Le soufflage forcé peut être effectué par exemple au moyen d'un compresseur à air ou au moyen d'une bouteille de gaz comprimé.

Les paramètres ajustables du procédé d'injection S3 sont les suivants : le nombre de cycles, la durée de la phase d'injection, la concentration de silicates (calculée en mg de Si / L d'eau), le débit d'eau et la température d'injection. Le tableau ci-dessous propose des valeurs opérationnelles pour ces différents paramètres.

*Tableau 1 : valeurs des différents paramètres intervenants dans la phase d'injection*

|  | exemple avantageux | Gamme préférentielle | Gamme possible |
|---|---|---|---|
| Nombre de cycles (-) | 3 | 2 - 10 | 1 - 50 |
| Durée de l'injection (h, min) | 2h | 30min à 12h | 10min à 24h |
| Concentration de Si (mg de Si / L d'eau) | 5'000 mg/L | 500 à 50'000 mg/L | 100 à 200'000 mg/L |
| Débit d'eau (L/min) | 0.3 L/min | 0.05 à 10 L/min | 0.05 à 100 L/min |
| Température d'injection (°C) | 55°C | 50 à 60°C | 35 - 65 °C |

On peut définir la quantité de silicates injectés par la relation :

$$M_i = C_i * Q * t \quad (1)$$

Où

Ci est la concentration en silicate de l'eau en entrée (g/L)
Q est le débit d'eau (L/sec)
t est la durée d'injection (sec)

Le « rendement de la déposition » est très sensible à de nombreux paramètres. On peut, en effet, définir un rendement de déposition de silicate par :

$$\mu = \frac{M_d}{M_i} \quad (2)$$

Où

Md est la masse de silicate déposé (g)
Mi est la masse de silicate injecté (g)

Ce rendement est particulièrement sensible à la température, mais aussi à la concentration de silicate, à la durée de l'injection, au débit, à la vitesse de l'écoulement et probablement à d'autres paramètres environnementaux. Le rendement de la déposition est notamment plus faible dans le cas d'une injection dans de l'eau froide que dans de l'eau chaude.

Le volume d'eau correspondant pour effectuer le dépôt peut être défini par la relation :

$$Ve = Md / Ci$$

Où

Ve est le volume d'eau (m3)
Md est la masse de silicate déposé (kg)
Ci est la concentration de silicate injecté (kg/m3)

On obtient alors une relation établissant l'effet des paramètres principaux (rendement, concentration, débit et temps d'injection) sur la masse de silicates déposés.

$$M_d = \mu * C_i * Q * t \quad (3)$$

A noter que le rendement de déposition dépend lui-même aussi de ces paramètres principaux (concentration, débit et temps d'injection) ainsi que des paramètres environnementaux, tel que pH, dureté, alcalinité, etc, tel que présenté en équation ci-après :

$$\mu = \mu(C_i, Q, t, par.env.) \quad (4)$$

Les différentes valeurs proposées dans le tableau 1 sont basées les arguments suivants :

*Concentrations de Si :*

- Limite supérieure de 200'000 mg de Si / L d'eau : c'est la concentration en Si que l'on a dans les solutions de silicates comprenant des silicates de sodium, notamment $Na_2SiO_3$ . Elles se présentent sous forme d'un liquide visqueux. C'est la limite de saturation ; à des concentrations plus élevées, la cristallisation par saturation apparaît.
- Valeurs optimales entre 1'000 et 20'000 mg de Si / L d'eau, notamment entre 2'000 et 10'000 pour des débits de pompe d'injection typiquement utilisés dans des installations d'eau sanitaire de bâtiments. Pour un débit max d'une pompe d'injection de 6L/h et un débit d'eau de 0.3 L/min, cela correspond à une concentration de 5'000 mg de Si / L d'eau.

*Température d'injection :*

- Limite inférieure d'environ 35°C : la température a une forte influence sur la cristallisation des silicates. Au-dessous de cette température, l'efficacité de la déposition des silicates sur les parois intérieures des conduites devient trop faible pour un procédé efficace et économe.
- Limite supérieure de 65°C : au-delà de 65°C, les silicates ont tendance à précipiter très rapidement pouvant provoquer une déposition au point d'injection, générant deux problèmes : les silicates ayant précipités dès l'injection ne sont plus disponibles pour les zones en avals et provoquent un bouchon au point d'injection.
- Valeur optimale autour de 55°C : c'est un compromis intéressant entre inefficacité et précipitation trop rapide.

*Le débit d'eau :*

- Limite inférieure de 0.01 L/min : à des débits faibles, il faut compenser en augmentant la concentration ou la durée d'injection, comme on peut le constater en équation (3).
- Limite supérieure de 100L/min : le bouilleur doit chauffer de l'eau froide, par exemple de 15°C, à la température d'injection, par exemple d'environ 55°C. La puissance consommée par le bouilleur est proportionnelle à l'écart de température et au débit d'eau à chauffer comme le présente la relation *(5)* ci-dessous. Ainsi, plus le débit est grand, plus la puissance du bouilleur doit être élevée.

$$\dot{Q} = \dot{m} * c * \Delta T \quad (5)$$

Où

| | | |
|---|---|---|
| Q | est la puissance chaleur délivrée par le chauffe-eau | (W) |
| m | est le débit massique d'eau | (kg/s) |
| c | est la capacité calorifique de l'eau = 4185 | (J/kgK) |
| $\Delta T$ | est la différence de température entre la sortie et l'entrée du chauffe eau | (K) |

Un autre aspect limitant le débit d'eau est le maintient de la concentration de silicates. Cet aspect peut être mis en évidence en inversant la relation (3). Une valeur optimale est autour de 0.3 L/min, tenant compte des contraintes décrites ci-dessus.

*Le nombre de cycles et la durée de l'injection :*

Ces deux paramètres dépendent principalement de qualité souhaitée de la déposition des silicates sur la paroi sachant que le temps disponible est limité (en général 24h max, voir 12h max) puisqu'il est souvent préférable de ne pas immobiliser un réseau d'eau durant de longues périodes, et de préférence pas plus d'une journée.

Les paramètres ajustables du procédé d'injection, notamment la durée d'une étape d'injection, la température, la concentration du produit de traitement, la composition du produit de traitement, la durée du cycle de traitement et le débit d'eau peuvent être essentiellement identiques d'une étape à l'autre, ou peuvent être différents d'une étape à un autre. Par exemple :

- la durée d'une étape peut être plus longue, et/ou à plus faible température, et/ou a plus faible concentration qu'une autre étape, ou

- la durée d'une étape peut être plus longue, et/ou à plus faible température, et/ou a plus grande concentration qu'une autre étape, etc.

La variation des paramètres peut notamment être avantageuse entre le premier cycle d'injection et le ou les cycle(s) suivant(s), en fonction de l'état des conduites ou du procédé de nettoyage effectué avant le procédé d'imprégnation. Afin de former une première couche uniforme et mince servant de surface d'accroche homogène pour aider à la croissance uniforme d'une couche subséquente, il peut y avoir un avantage à effectuer le premier cycle à plus faible concentration de produit de traitement que les autres cycles, mais possiblement à plus longue durée et/ou à une température différente. En effet, les propriétés de la surface intérieure des conduites avant traitement ou après nettoyage pouvant être très variables le long du circuit d'eau sanitaire, notamment les matériaux et les irrégularités géométriques (rugosités, aspérités) à la surface, la vitesse de formation d'un film à la surface nue de la conduite peut être très variable d'une partie de la conduite à une autre. Une croissance plus lente de la première couche peut aider à former un film plus homogène qu'une croissance rapide. Par la suite, pour des raisons d'efficacité et d'économie de temps, la croissance du film peut être effectuée plus rapidement puisque la première couche uniformise les propriétés de la surface.

Les durées et les paramètres des cycles de séchage peuvent aussi être essentiellement identiques d'une étape à l'autre, ou peuvent être différents d'une étape à une autre. Notamment, il peut être avantageux que la durée du dernier cycle de séchage soit plus longue que les précédents afin d'augmenter la résistance de la couche d'imprégnation avant la remise en service normale, le procédé étant globalement plus efficace et économe si plus de temps de séchage est dispensé à la fin du procédé d'imprégnation.

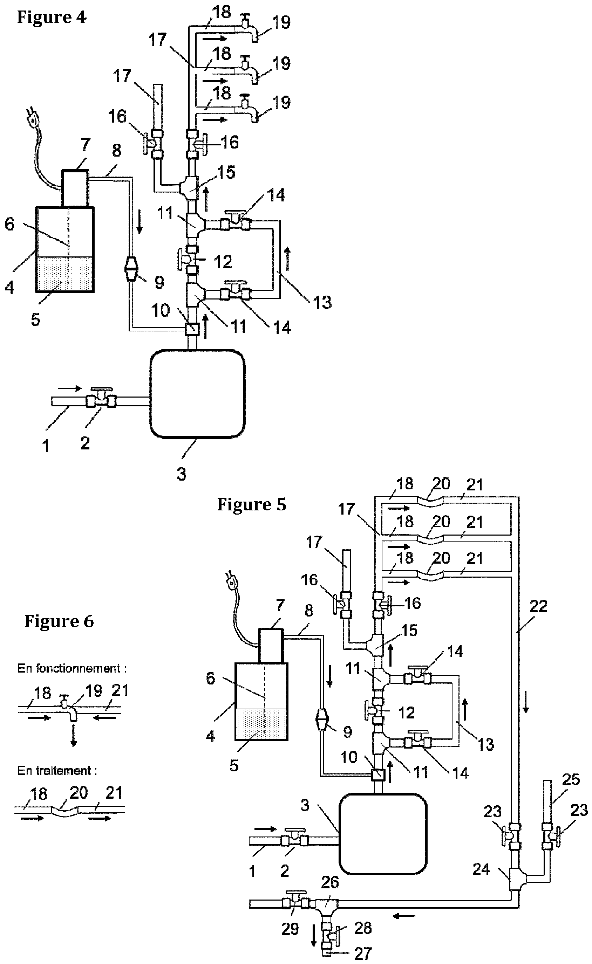

Faisant référence à la figure 4, le traitement d'un réseau simple comprenant un circuit d'eau chaude ou d'eau froide est illustré. Ce cas de figure peut se présenter pour diverses raisons :

- Le bâtiment à traiter ne dispose pas d'une production d'eau chaude centralisée mais de bouilleurs individuels. Le bâtiment ne dispose donc que d'un circuit d'eau froide.
- Pour diverses raisons (degré de corrosion différent, matériaux différents,...), il est nécessaire de ne traiter que l'eau chaude ou que l'eau froide.

Dans ce cas, le montage est idéalement réalisé tel que présenté en figure 4, illustrant une configuration avec les caractéristiques suivantes :

- conduite principale 1 à l'entrée du bâtiment

- vanne 2 permettant de stopper l'écoulement dans le bâtiment

- source d'eau chaude 3 (dans cet exemple faisant partie du circuit d'eau chaude de l'installation sanitaire) - l'eau est ainsi chauffée de la température de la source d'eau froide (par exemple 10 à 20°C) à la température d'imprégnation, par exemple 55°C. Le débit d'eau maximum est donné par la puissance du chauffe-eau selon la formule (5). Selon l'équipement du bâtiment, cette production d'eau chaude peut être :

  a. Le bouilleur central du circuit d'eau chaude sanitaire peut être exploité en direct pour traiter les conduites eau chaude et qui peut être dérivé pour traiter les conduites eau froide.
  b. Si le bâtiment ne dispose pas d'un bouilleur central ou que sa capacité volumique ou thermique n'est pas suffisante, l'élément 3 peut être une source d'eau chaude externe, par exemple un chauffe-eau d'appoint.

- réservoir 4 contenant le produit d'entretien des conduites à base de silicate

- produit d'entretien 5 à base de silicate

- tuyau d'aspiration 6 du produit d'entretien vers la pompe doseuse

- pompe doseuse 7 d'injection des silicates dans la conduite principale

- tuyau d'alimentation 8 en silicates

- valve anti-retour 9

- point d'injection 10 des silicates dans l'écoulement d'eau

- dérivations 11 permettant de diriger l'écoulement dans un by-pass

- vanne 12 permettant de stopper l'écoulement dans la conduite principale pour forcer son passage dans le by-pass

- tube témoin 13 du by-pass qui est démontable et qui permet d'évaluer la qualité de la déposition du film silicate après application du traitement d'imprégnation

- vannes 14 permettant d'isoler le by-pass de l'écoulement pour effectuer son démontage en vue de son inspection

- dérivations 15 alimentant les différentes colonnes montantes

- vannes 16 permettant d'isoler ou d'alimenter la/les colonne(s) montante(s)

- colonnes montantes 17 du circuit d'eau sanitaire d'un bâtiment

- dérivations 18 des différentes conduites

- robinets 19 en sortie de chaque conduite.

En cas de plusieurs colonnes montantes 17, il est avantageux de les séparer ou de les isoler préalablement à l'aide d'une vanne. Ceci permet de travailler indépendamment sur différents circuits de l'installation d'eau sanitaire d'un bâtiment et d'augmenter l'efficacité du traitement. On notera que dans ce cas, le débit de l'écoulement principal peut être réglé par l'ouverture des robinets. Cela peut se fait de manière alternée ou en parallèle.

L'eau étant chargée en silicate, son écoulement dans les éviers forme des dépôts de silicate. Il est alors avantageux de monter un tuyau flexible en sortie du robinet permettant de faire couler la solution de silicates directement dans le siphon au fond de l'évier.

A noter aussi que pour les conduites d'eau froide, il est avantageux d'effectuer un refroidissement avant la remise en eau afin de conserver la totalité de la couche de protection.

Faisant référence à la figure 5, le traitement d'un réseau double comprenant un circuit d'eau chaude et un circuit d'eau froide est illustré. Dans le cas où il est nécessaire de traiter le circuit d'eau chaude et le circuit d'eau froide, on peut :

- traiter alternativement le circuit d'eau chaude et d'eau froide selon la procédure présentée en relation avec la figure 4 ;

- ou procéder plus avantageusement pour réduire le temps de travail en connectant en série les deux circuits pour les traiter en une seule opération tel qu'illustré dans la figure 6.

Cette seconde approche reprend le principe de traitement présenté en figure 4, néanmoins avec une configuration modifiée présentant les caractéristiques additionnelles ou modifiées suivantes:

- source d'eau chaude 3 provient du bouilleur central et non pas un chauffe-eau d'appoint externe
- tuyaux souples 20 permettent de connecter les dérivations 18 des circuits eau chaude aux dérivations 21 du circuit eau froide
- colonne montante eau froide 22
- vannes 23 permettant d'isoler les différentes colonnes montantes eau froide
- dérivations 24 des différentes colonnes montantes

- colonnes montantes 25 eau froide
- dérivation 26 permettant de récupérer la solution de silicates injectés
- tuyau 27 de récupération des silicates
- vanne de récupération 28 des silicates
- vanne d'isolement 29 d'arrivée d'eau froide dans le bâtiment

Les robinets 19 sont démontés pour connecter à l'aide d'un tuyau souple 20 les dérivations des sorties eau chaude 18 et les dérivations des sorties eau froide 21. Ceci permet d'effectuer le traitement d'imprégnation dans le circuit d'eau chaude 17, 18 et dans le circuit d'eau froide 21, 22 d'une seule opération d'injection. On récupère alors la solution de silicate à l'aide d'une dérivation 26, d'une vanne 28 et d'un tuyau de récupération de silicate 27.

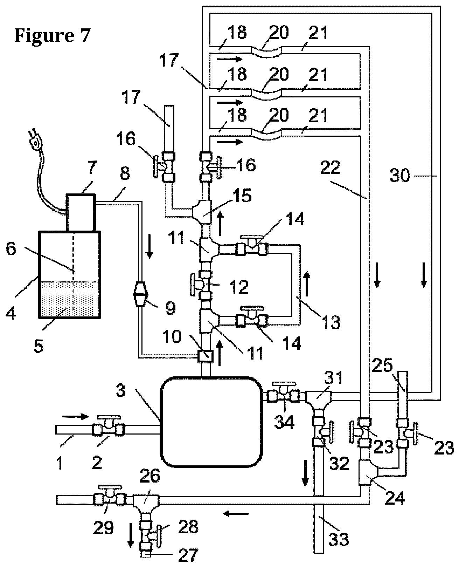

Faisant référence à la figure 7, le traitement d'un réseau triple comprenant un circuit d'eau chaude et un circuit d'eau froide, le circuit d'eau chaude ayant une boucle permettant une circulation de l'eau chaude de retour vers le chauffe-eau 3. Dans le cas où il est nécessaire de traiter un réseau triple eau froide et eau chaude comprenant une boucle de circulation, on peut :

- procéder selon une approche combinant des méthodes présentées en relation avec les figures 4 et 5
- procéder selon une approche permettant de traiter le triple réseau selon une seule opération tel que présenté ci-dessous.

Le schéma de fonctionnement est celui présenté en figure 7. Il reprend le principe de celui présenté en figure 5, néanmoins avec une configuration modifiée présentant les caractéristiques additionnelles ou modifiées suivantes:

- conduite de circulation d'eau chaude 30 (la pompe de circulation n'est pas représentée sur ce schéma)
- dérivation 31 permettant de récupérer la solution de silicates injectés de la conduite de circulation
- tuyau de récupération 33 des silicates
- vanne de récupération 32 des silicates
- vanne d'isolement 34 d'arrivée de l'eau de circulation

Pour cette troisième configuration, afin d'effectuer l'imprégnation d'un seul coup, on peut distribuer en parallèle le circuit eau froide et le circuit de circulation, selon une procédure similaire à celle décrite en relation avec la figure 5.

Dans le cas où il est nécessaire de traiter uniquement un circuit d'eau chaude comprenant un circuit de circulation, la procédure est similaire à celle présentée en figure 7, néanmoins sans le circuit eau froide.

Dans ces schémas, le sens de l'écoulement est toujours présenté de l'eau chaude vers l'eau froide car cela est avantageux, le bouilleur étant sur l'eau chaude, cela évite de devoir reconnecter les conduites au bouilleur. Il est néanmoins possible de modifier les positions des entrées et sorties de la solution de traitement.

## Revendications

1. Procédé de traitement d'un circuit d'eau sanitaire d'un réseau d'eau sanitaire, comprenant l'injection d'un produit de traitement comprenant des silicates dans de l'eau circulant dans ledit circuit pour former un film sur les surfaces intérieures dudit circuit, **caractérisé en ce que** l'injection du produit de traitement comprend au moins une étape d'injection de silicates, hors exploitation du réseau d'eau sanitaire, à une concentration entre 100 et 200'000 milligrammes de silicium par litre d'eau (mg de Si / L d'eau) dans l'eau circulant dans ledit circuit pendant une durée inférieure à 48 heures (h), le débit d'eau circulant dans le circuit étant ajusté dans une gamme entre 0.05 et 100 litres par minute (L/min) et la température d'eau circulant dans le circuit étant ajusté dans une gamme entre 40 et 65 °C.

2. Procédé selon la revendication précédente, **caractérisé en ce que** la concentration des silicates dans l'eau circulant dans ledit circuit est ajustée entre 500 et 50'000 mg de Si / L d'eau, de préférence entre 1'000 et 20'000 mg de Si / L d'eau.

3. Procédé selon l'une des revendications précédentes, **caractérisé en ce que** la durée d'une étape d'injection est entre 30 minutes et 12 heures, de préférence entre 1 heure et 4 heures, par exemple autour de 2 heures.

4. Procédé selon l'une des revendications précédentes, **caractérisé en ce que** le débit d'eau circulant dans le circuit est ajusté dans une gamme entre 0.05 et 10 L/min.

5. Procédé selon l'une des revendications précédentes, **caractérisé en ce que** la température de l'eau circulant dans le circuit est ajusté dans une gamme entre 50 et 60 °C.

6. Procédé selon l'une des revendications précédentes, **caractérisé en ce qu'**il comprend au moins deux étapes d'injection de produit de traitement, de préférence au moins trois étapes d'injection de produit de traitement.

7. Procédé selon l'une des revendications précédentes, **caractérisé en ce qu'**il comprend au moins une étape de séchage par le vidage d'eau du circuit pour une durée entre 5 minutes et deux heures, après au moins une des étapes d'injection de produit de traitement.

8. Procédé selon la revendication précédente, **caractérisé en ce qu'**il comprend une étape de séchage après chaque étape d'injection de produit de traitement.

9. Procédé selon l'une des deux revendications précédentes, **caractérisé en ce que** la durée d'une étape de séchage est entre 10 minutes et 1 heure, de préférence entre 20 minutes et 40 minutes, par exemple autour de 30 minutes.

10. Procédé selon l'une des revendications précédentes, **caractérisé en ce que** le circuit d'eau sanitaire comprend un circuit d'eau froide, et le procédé comprend une étape d'interconnexion du circuit d'eau froide à une source d'eau chaude configuré pour faire circuler l'eau chaude dans le circuit d'eau froide pendant l'injection du produit de traitement.

11. Procédé selon la revendication précédente, **caractérisé en ce que** le circuit d'eau sanitaire comprend un circuit d'eau froide et un circuit d'eau chaude, et le procédé comprend une étape d'interconnexion du circuit d'eau froide au circuit d'eau chaude configuré pour faire circuler l'eau chaude dans le circuit d'eau froide pendant l'injection du produit de traitement.

12. Procédé selon la revendication 10, **caractérisé en ce que** la source d'eau chaude est générée par un chauffe-eau externe.

13. Procédé selon l'une des revendications précédentes, **caractérisé en ce que** les silicates sont sous forme de silicates de sodium en solution, notamment comprenant $(Na_2O)_n + SiO_2$, $n$ étant compris entre 1.6 et 3.8.

14. Procédé selon l'une des revendications précédentes, **caractérisé en ce qu'**il comprend une étape de nettoyage du circuit de circulation d'eau sanitaire avant l'injection du produit de traitement comprenant des silicates, l'étape de nettoyage comprenant une injection d'acide dans le circuit de circulation d'eau sanitaire.

15. Procédé selon l'une des revendications précédentes, **caractérisé en ce qu'**il comprend, après les étapes des revendications précédentes, une injection continue du produit de traitement comprenant des silicates en quantité proportionnelle au volume d'eau entrant dans le circuit de circulation d'eau sanitaire, la quantité maximum de produit injecté ne dépassant pas une valeur fixée par les normes alimentaires.

**Patentansprüche**

1. Verfahren zur Behandlung eines Sanitärwasserkreises eines Sanitärwassernetzes, umfassend die Einleitung eines Behandlungsprodukts, umfassend Silikate, in Wasser, das in dem Kreis zirkuliert, um einen Film auf den inneren Oberflächen des Kreises zu bilden, **dadurch gekennzeichnet, dass** die Einleitung des Behandlungsprodukts mindestens einen Einleitungsschritt von Silikaten, außerhalb des Betriebs des Sanitärwassernetzes, in einer Konzentration zwischen 100 und 200'000 Milligramm Silizium je Liter Wasser (mg Si/L Wasser) in das Wasser, das in dem Kreis zirkuliert, während einer Dauer von unter 48 Stunden (Std.) umfasst, wobei die Wassermenge, die in dem Kreis zirkuliert, in einem Bereich zwischen 0,05 und 100 Liter pro Minute (L/min) eingestellt wird und die Temperatur des Wassers, das in dem Kreis zirkuliert, in einem Bereich zwischen 40 und 65 °C eingestellt wird.

2. Verfahren nach vorangehendem Anspruch, **dadurch gekennzeichnet, dass** die Konzentration der Silikate in dem Wasser, das in dem Kreis zirkuliert, zwischen 500 und 50'000 mg Si/L Wasser, vorzugsweise zwischen 1'000 und 20'000 mg Si/L Wasser, eingestellt wird.

3. Verfahren nach einem der vorangehenden Ansprüche, **dadurch gekennzeichnet, dass** die Dauer eines Einleitungsschritts zwischen 30 Minuten und 12 Stunden, vorzugsweise zwischen 1 Stunde und 4 Stunden, beispielsweise zirka 2 Stunden, beträgt.

**4.** Verfahren nach einem der vorangehenden Ansprüche, **dadurch gekennzeichnet, dass** die Wassermenge, die in dem Kreis zirkuliert, in einem Bereich zwischen 0,05 und 10 L/min eingestellt wird.

**5.** Verfahren nach einem der vorangehenden Ansprüche, **dadurch gekennzeichnet, dass** die Temperatur des Wassers, das in dem Kreis zirkuliert, in einem Bereich zwischen 50 und 60 °C eingestellt wird.

**6.** Verfahren nach einem der vorangehenden Ansprüche, **dadurch gekennzeichnet, dass** es mindestens zwei Einleitungsschritte von Behandlungsprodukt, vorzugsweise mindestens drei Einleitungsschritte von Behandlungsprodukt, umfasst.

**7.** Verfahren nach einem der vorangehenden Ansprüche, **dadurch gekennzeichnet, dass** es mindestens einen Trocknungsschritt durch das Ablassen von Wasser des Kreises für eine Dauer zwischen 5 Minuten und zwei Stunden nach mindestens einem der Einleitungsschritte von Behandlungsprodukt umfasst.

**8.** Verfahren nach vorangehendem Anspruch, **dadurch gekennzeichnet, dass** es einen Trocknungsschritt nach jedem Einleitungsschritt von Behandlungsprodukt umfasst.

**9.** Verfahren nach einem der zwei vorangehenden Ansprüche, **dadurch gekennzeichnet, dass** die Dauer eines Trocknungsschritts zwischen 10 Minuten und 1 Stunde, vorzugsweise zwischen 20 Minuten und 40 Minuten, beispielsweise zirka 30 Minuten, beträgt.

**10.** Verfahren nach einem der vorangehenden Ansprüche, **dadurch gekennzeichnet, dass** der Sanitärwasserkreises einen Kaltwasserkreis umfasst und das Verfahren einen Verbindungsschritt des Kaltwasserkreises mit einer Warmwasserquelle umfasst, der konfiguriert ist, damit das Warmwasser während des Einleitens des Behandlungsprodukts im Kaltwasserkreis zirkuliert.

**11.** Verfahren nach vorangehendem Anspruch, **dadurch gekennzeichnet, dass** der Sanitärwasserkreis einen Kaltwasserkreis und einen Warmwasserkreis umfasst und das Verfahren einen Verbindungsschritt des Kaltwasserkreises mit dem Warmwasserkreis umfasst, der konfiguriert ist, damit das Warmwasser während des Einleitens des Behandlungsprodukts im Kaltwasserkreis zirkuliert.

**12.** Verfahren nach Anspruch 10, **dadurch gekennzeichnet, dass** die Warmwasserquelle von einem externen Wassererhitzer gebildet ist.

**13.** Verfahren nach einem der vorangehenden Ansprüche, **dadurch gekennzeichnet, dass** die Silikate in Form von gelösten Natriumsilikaten vorliegen, insbesondere umfassend $(Na_2O)_n + SiO_2$, wobei $n$ zwischen 1,6 und 3,8 beträgt.

**14.** Verfahren nach einem der vorangehenden Ansprüche, **dadurch gekennzeichnet, dass** es einen Reinigungsschritt des Sanitärwasserzirkulationskreises vor dem Einleiten des Behandlungsprodukts, umfassend Silikate, umfasst, wobei der Reinigungsschritt eine Einleitung von Säure in den Sanitärwasserzirkulationskreis umfasst.

**15.** Verfahren nach einem der vorangehenden Ansprüche, **dadurch gekennzeichnet, dass** es nach den Schritten der vorangehenden Ansprüche eine kontinuierliche Einleitung des Behandlungsprodukts, umfassend Silikate, in proportionaler Menge zum Wasservolumen, das in den Sanitärwasserzirkulationskreis eintritt, umfasst, wobei die maximale Menge des eingeleiteten Produkts einen Wert, der von den Lebensmittelnormen festgelegt ist, nicht überschreitet.

**Claims**

**1.** A method for treating a sanitary water circuit of a sanitary water system, comprising injecting a treatment product comprising silicates into the water circulating in said circuit in order to form a film on the inner surfaces of said circuit, **characterized in that** the injecting of the treatment product comprises at least one step of injecting silicates, when the sanitary water system is not in operation, at a concentration of between 100 and 200'000 milligrams of silicon per litre of water (mg Si/L water) into the water circulating in said circuit for a period of less than 48 hours (h), the circulating water flow rate in the circuit being adjusted in a range between 0.05 and 100 litres per minute (L/min) and the circulating water temperature in the circuit being adjusted in a range between 40 and 65°C.

2. The method according to the preceding claim, **characterized in that** the silicate concentration in the water circulating in said circuit is adjusted between 500 and 50'000 mg Si/L water, preferably between 1'000 and 20'000 mg Si/L water.

3. The method according to one of the preceding claims, **characterized in that** the injection step lasts between 30 minutes and 12 hours, preferably between 1 hour and 4 hours, for example around 2 hours.

4. The method according to one of the preceding claims, **characterized in that** the circulating water flow rate in the circuit is adjusted in a range between 0.05 and 10 L/min.

5. The method according to one of the preceding claims, **characterized in that** the circulating water temperature in the circuit is adjusted in a range between 50 and 60°C.

6. The method according to one of the preceding claims, **characterized in that** it comprises at least two treatment product injection steps, preferably at least three treatment product injection steps.

7. The method according to one of the preceding claims, **characterized in that** it comprises at least one drying step consisting of emptying the water circuit for a period of between 5 minutes and 2 hours, after at least one of the treatment product injection steps.

8. The method according to the preceding claim, **characterized in that** it comprises a drying step after each treatment product injection step.

9. The method according to one of the two preceding claims, **characterized in that** a drying step lasts between 10 minutes and 1 hour, preferably between 20 minutes and 40 minutes, for example around 30 minutes.

10. The method according to one of the preceding claims, **characterized in that** the sanitary water circuit comprises a cold water circuit, and the method comprises a step of interconnecting the cold water circuit with a hot water supply configured to circulate hot water in the cold water circuit during injection of the treatment product.

11. The method according to the preceding claim, **characterized in that** the sanitary water circuit comprises a cold water circuit and a hot water circuit, and the method comprises a step of interconnecting the cold water circuit with the hot water circuit configured to circulate hot water in the cold water circuit during injection of the treatment product.

12. The method according to claim 10, **characterized in that** the hot water supply is generated by an external water heater.

13. The method according to one of the preceding claims, **characterized in that** the silicates are in the form of sodium silicates in solution, notably comprising $(Na_2O)_n + SiO_2$, $n$ being from 1.6 to 3.8.

14. The method according to one of the preceding claims, **characterized in that** it comprises a step of cleaning the sanitary water circulation circuit before injecting the treatment product comprising silicates, the cleaning step comprising injecting acid into the sanitary water circulation circuit.

15. The method according to one of the preceding claims, **characterized in that** it comprises, after the steps of the preceding claims, continuously injecting the treatment product comprising silicates in an amount proportional to the volume of water entering the sanitary water circulation circuit, the maximum amount of product injected not exceeding a value set by food standards.

# Figure 1

: étapes s'effectuant hors exploitation de la conduite

| | |
|---|---|
| Diagnostic de l'état des conduites d'eau sanitaire | S0 |

Etat de dégradation trop avancé pour le traitement

En cours de dégradation

Aucune dégradation

Rénovation

Nettoyage  S2

Imprégnation

S3, S4

Exploitation avec traitement

Exploitation sans traitement

Surdosage

Traitement courant  S6

## Figure 2

configuration du réseau
de circulation et de la
source d'eau chaude

installation ou
configuration du groupe
de traitement

nettoyage — S2

injection de
silicates — S3

*n cycles*

vidage du circuit /
séchage — S4

rinçage — S5

traitement en continu
(selon normes alimentaires) — S6

## Figure 3

2 h   30 min   2 h   30 min   2 h   30 min

temps

█ période d'injection

▓ période de séchage

**Figure 4**

**Figure 5**

**Figure 6**

En fonctionnement :

En traitement :

**Figure 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1432534 B1